# EUROPÄISCHE PATENTANMELDUNG

(11) **EP 1 482 233 A2**
(43) Veröffentlichungstag der Anmeldung: **01.12.2004**
(21) Anmeldenummer: 04008048.3
(22) Anmeldetag: 02.04.2004
(51) Int. Cl.: F16L 47/26, F16L 47/02

(54) **Rohrartiger Stutzen**

(30) Priorität: 30.05.2003 DE 10324471
(71) Anmelder: Rasmussen GmbH, 63477 Maintal (DE)
(72) Erfinder: Kertesz, Janos, 65719 Hofheim (DE)
(74) Vertreter: Knoblauch, Andreas, Dr.-Ing.

(57) **Zusammenfassung**

Ein rohrartiger Stutzen, der thermoplastischen Kunststoff aufweist und zum Anschließen einer Fluidleitung an einem Behälter (6), der ebenfalls thermoplastischen Kunststoff aufweist, dient, hat zwei Teile (1, 2), die im Zweikomponenten-Spritzgießverfahren verbunden sind. Der erste Teil (1) hat eine geringere Kriechneigung unter Druckbelastung und eine geringere Quellfähigkeit gegenüber kohlenwasserstoffhaltigen Fluiden als der zweite Teil (2). Der zweite Teil (2) geht eine Schmelzverbindung mit dem Behälter (6) ein. Um zu erreichen, daß der Stutzen thermischen und mechanischen Belastungen besser standhält und eine höhere Diffusionssperrfähigkeit aufweist, ist dafür gesorgt, daß der zweite Teil (2) einen Verstärkungsfüllstoff enthält, dessen Menge und Art so gewählt sind, daß die Kriechneigung und Quellfähigkeit des zweiten Teils (2) annähernd gleich der des ersten Teils (1) sind, zwischen dem zweiten Teil (2) und dem Behälter (6) eine mindestens ebenso hohe Festigkeit der Verbindung wie zwischen den beiden Teilen (1, 2) erreichbar ist und die Wärmeformbeständigkeit des zweiten Teils (2) wenigstens gleich der des Behälters (6) und höchstens nahezu gleich der des ersten Teils (1) ist.

## Beschreibung

Die Erfindung betrifft einen rohrartigen Stutzen, der thermoplastischen Kunststoff aufweist, zum Anschließen einer Fluidleitung an einem Behälter, der thermoplastischen Kunststoff aufweist, wobei der Stutzen einen ersten Teil und einen zweiten Teil aufweist, die im Zweikomponenten-Spritzgießverfahren verbunden sind und von denen der erste Teil eine geringere Kriechneigung unter Druckbelastung und eine geringere Quellfähigkeit gegenüber kohlenwasserstoffhaltigen Fluiden als der zweite Teil hat und der zweite Teil eine Schmelzverbindung mit dem Behälter eingeht.

Bei einem bekannten Stutzen dieser Art (DE 42 39 909 C1) soll der zweite Teil unverstärkt sein. In der Praxis hat sich jedoch gezeigt, daß der zweite Teil bei höheren Temperaturen, wie sie beispielsweise bei Common-Rail-Dieselmotoren in dem vom Motor über den Stutzen am Tank in diesen zurückgeleiteten, überschüssigen Diesel-Kraftstoff auftreten, thermisch verformt werden kann, wenn die am Stutzen angeschlossene Fluidleitung gleichzeitig höheren Kräften ausgesetzt wird, wie sie im Betrieb eines Kraftfahrzeugs auftreten können. Darüber hinaus kann der überwiegend aus HDPE (hochdichtes Polyethylen) bestehende zweite Teil bei Berührung mit einem kohlenwasserstoffhaltigen Fluid, wie Benzin oder Dieselöl, stärker quellen als das aus überwiegend verstärktem Polyamid bestehende Material des ersten Teils. Dies kann zu Rissen im Stutzen in der Nähe der Verbindungsstelle beider Teile führen. Ferner hat das HDPE des zweiten Teils keine hinreichend hohe Diffusionssperrfähigkeit gegenüber kohlenwasserstoffhaltigen Fluiden, wie Benzin oder Dieselöl. Dagegen geht es mit dem HDPE aufweisenden Material des Tanks eine Schmelzverbindung ein.

Der Erfindung liegt die Aufgabe zugrunde, einen Stutzen der eingangs genannten Art anzugeben, der thermischen und mechanischen Belastungen besser standhält und eine höhere Diffusionssperrfähigkeit aufweist.

Erfindungsgemäß ist diese Aufgabe dadurch gelöst, daß der zweite Teil einen Verstärkungsfüllstoff enthält, dessen Menge und Art so gewählt sind, daß die Kriechneigung und Quellfähigkeit des zweiten Teils annähernd gleich der des ersten Teils sind, zwischen dem zweiten Teil und dem Behälter eine mindestens ebenso hohe Festigkeit der Verbindung wie zwischen den beiden Teilen erreichbar ist und die Wärmeformbeständigkeit des zweiten Teils wenigstens gleich der des Behälters und höchstens nahezu gleich der des ersten Teils ist.

Bei dieser Lösung steigert der Verstärkungsfüllstoff nicht nur die Wärmeformbeständigkeit und mechanische Festigkeit des zweiten Teils, sondern auch die Diffusionssperrfähigkeit gegenüber kohlenwasserstoffhaltigen Fluiden bei entsprechender Wahl der Art und Menge des Verstärkungsfüllstoffs.

Besonders geeignet ist ein Verstärkungsfüllstoff, der aus der Gruppe der Kunststoffasern, Polyamide (PA), Polyethylenterephthalate (PET), Polybutylenterephthalate (PBT), Polyethylennahphthalate (PEN), Polybutylennaphthalate (PBN), Polyphenylensulfide (PPS), Aramide, Flüssigkristallpolymeren (LCP), Glasfasern, Glaskugeln, Mineralien, pflanzlichen Fasern und Nanoteilchen, wie Nanoton und Nanoröhrchen, z.B. Graphit-Nanoröhrchen, ausgewählt ist.

Die Schmelztemperatur der Kunststoffasern sollte um wenigstens 20°C höher als die des Kunststoffs des zweiten Teils sein, um zu verhindern, daß die Kunststoffasern beim Spritzgießen des zweiten Teils schmelzen.

Auch die Diffusionssperrfähigkeit der Kunststoffasern sollte größer sein als die des Kunststoffs des zweiten Teils, um die Diffusionssperrfähigkeit des zweiten Teils und damit des Stutzens zu steigern.

Das thermoplastische Material des ersten Teils kann aus der Gruppe der Polyamide, Polyester, Polyolefine, Polyphenylensulfide (PPS), Fluorthermoplaste und Polyacetale ausgewählt sein.

Der zweite Teil kann wie bisher HDPE als Basismaterial aufweisen. Zusätzlich kann der zweite Teil und/oder der erste Teil eine Diffusionssperrschicht aufweisen. Dadurch wird die Diffusionssperrfähigkeit des Stutzens noch weiter gesteigert.

Der erste und der zweite Teil sowie die Sperrschicht können im Mehrkomponenten-Spritzgießverfahren ausgebildet sein Diese Art der Verbindung ist einfach und rasch durchführbar.

Vorzugsweise ist der thermoplastische Kunststoff des zweiten Teils ein funktionalisierter Kunststoff. Dadurch ergibt sich eine festere Verbindung zwischen dem ersten und dem zweiten Teil sowie zwischen dem Kunststoff des zweiten Teils und dem Verstärkungsfüllstoff soweit dieser aus Kunststoff besteht, insbesondere wenn der funktionalisierte Kunststoff des zweiten Teils ein mit Maleinsäureanhydrid gepfropftes Polyolefin ist.

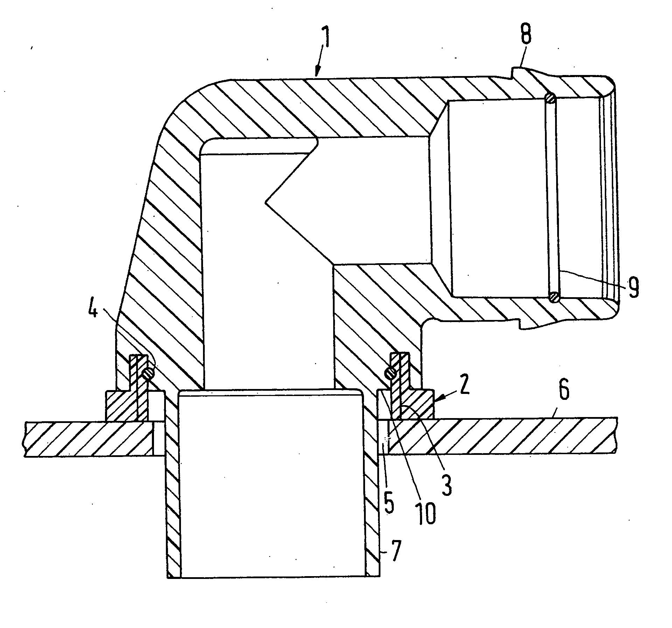

Die Erfindung und ihre Weiterbildungen werden nachstehend anhand der beiliegenden Zeichnung eines bevorzugten Ausführungsbeispiels eines erfindungsgemäßen Stutzens näher beschrieben.

Der Stutzen weist einen ersten Teil 1 in Form eines abgewinkelten Rohrstücks, einen zweiten Teil 2 in Form eines Rings mit abgestuftem Außendurchmesser und eine dünne, zylindrische Diffusionssperrschicht 3 im zweiten Teil 2 sowie einen Dichtring 4 auf der Innenseite des zweiten Teils 2 auf und ist mit dem zweiten Teil 2 auf dem Rand einer Öffnung 5 eines nur teilweise dargestellten Behälters 6, hier des Tanks eines Kraftfahrzeugs, durch Rotations- oder Spiegelschweißen angeschweißt.

Der erste Teile 1 enthält einen thermoplastischen, haftungsmodifizierten Kunststoff mit geringer Kriechneigung gegenüber Druckbelastung sowie einen Verstärkungsfüllstoff, der die Kriechneigung noch weiter verringert. Das thermoplastische Material des ersten Teils 1 ist aus der Gruppe der Polyamide, Polyester, Polyolefine, Polyphenylensulfide (PPS), Fluorthermoplaste und Polyacetale ausgewählt. Es kann sich mithin um ein oder mehrere verschiedene dieser Materialien handeln. Bevorzugt wird jedoch ein Polyamid, vorzugsweise eines oder mehrere der Polyamide PA6, PA6.6, PA6.4, PA11 und PA12, die eine hohe Diffusionssperrfähigkeit gegenüber kohlenwasserstoffhaltigen Fluiden, wie Benzin oder Diesöl sowie deren Dämpfen, und eine geringe Kriechneigung gegenüber mechanischer Druckbelastung haben. Die Kriechneigung des ersten Teils 1 wird insbesondere dadurch weiter verringert, daß der Verstärkungsfüllstoff des ersten Teils 1 aus der Gruppe der Kunststoffasern, Polyamide (PA), Polyethylenterephthalate (PET), Polybutylenterephthalate (PBT), Polyethylennahphthalate (PEN), Polybutylennaphthalate (PBN), Polyphenylensulfide (PPS), Aramide, Flüssigkristallpolymeren (LCP), Glasfasern, Glaskugeln, Mineralien, pflanzlichen Fasern und Nanoteilchen, wie Nanoton und Nanoröhrchen, z.B. Graphit-Nanoröhrchen, ausgewählt ist.

Auch der zweite Teil 2 enthält einen Verstärkungsfüllstoff, dessen Menge und Art so gewählt sind, daß die Kriechneigung und Quellfähigkeit des zweiten Teils 2 angenähert gleich der des ersten Teils 1 sind, zwischen dem zweiten Teil 2 und dem Behälter 6 eine mindestens ebenso hohe Festigkeit der Verbindung wie zwischen den beiden Teilen 1, 2 erreichbar ist und die Wärmeformbeständigkeit des zweiten Teils 2 wenigstens gleich der des Behälters 6 und höchstens nahezu gleich der des ersten Teils 1 ist. Der Verstärkungsfüllstoff erhöht nicht nur die Wärmeformbeständigkeit und mechanische Festigkeit des zweiten Teils 2, sondern auch seine Diffusionssperrfähigkeit gegenüber kohlenwasserstoffhaltigen Fluiden bei entsprechender Wahl der Art und Menge des Verstärkungsfüllstoffs. Auch bei dem Verstärkungsfüllstoff des zweiten Teils 2 kann es sich um den einen und/oder anderen des ersten Teils 1 handeln. Soweit es sich um Kunststoffasern handelt, haben sie eine um wenigstens 20°C höhere Schmelztemperatur und eine höhere Diffusionssperrfähigkeitt als die des Kunststoffs des zweiten Teils 2.

Der thermoplastische Kunststoff des zweiten Teils 2 ist ein HDPE. Er kann aber auch funktionalisiert sein. Dies ergibt eine noch festere Verbindung zwischen dem ersten Teil 1 und dem zweiten Teil 2 sowie zwischen dem Kunststoff des zweiten Teils 2 und seinem Verstärkungsfüllstoff, soweit dieser aus Kunststoff besteht, insbesondere wenn der funktionalisierte Kunststoff des zweiten Teils 2 ein mit Maleinsäureanhydrid gepropftes Polyolefin ist.

Durch die Sperrschicht 3 im zweiten Teil 2 wird die Diffusionssperrfähigkeit des zweiten Teils 2 noch weiter gesteigert und damit auch die des gesamten Stutzens. Eine solche Sperrschicht kann auch in dem ersten Teil 1 oder nur im ersten Teil 1 vorgesehen sein.

Die beiden Teile 1 und 2 sowie die Sperrschicht 3 sind im Mehrkomponenten-Spritzgießverfahren hergestellt worden, wobei erst die Sperrschicht 3 in einem Formwerkzeug gespritzt, dann nach dem Aushärten der Sperrschicht 3 der zweite Teile 2 in einem Formwerkzeug gespritzt und gleichzeitig um die Sperrschicht 3 herumgespritzt wird. Nach dem Einlegen des Dichtrings 4 in eine innere Ringnut des zweiten Teils 2 wird der erste Teil 1 in einem Formwerkzeug gespritzt und gleichzeitig um den dünneren Wandabschnitt des zweiten Teils 2 und den Dichtring 4 herumgespritzt.

Es ist aber auch möglich, die Sperrschicht 3 nach dem Spritzen des zweiten Teils 2 in die noch plastische Seele des zweiten Teils 2 zu spritzen und schließlich das Material des ersten Teils 1 um das ausgehärtete zweite Teil 2 und den Dichtring 4 in einem Formwerkzeug zuspritzen. Bei dieser Art des Mehrkomponenten-Spritzgießverfahrens ergeben sich an den Grenzflächen zwischen dem Teil 2 und der Sperrschicht 3 geringfügige Wellungen, die zum einen wie eine Labyrinthdichtung wirken und zum anderen für einen zusätzlichen Formschluß sorgen.

Der erste Teil 1 hat einen durch die Öffnung 5 in den Behälter 6 ragenden Fortsatz 7, am äußeren Endabschnitt eine umlaufende Halterippe 8 sowie innerhalb dieses Endabschnitts einen in eine Ringnut eingelegten Dichtring 9. In diesen Endabschnitt wird ein am einen Ende der mit dem Behälter 6 zu verbindenden Fluidleitung dicht befestigtes Kupplungsstück eingeführt, das mit Haken an den Enden elastischer Haltearme die Halterippe 8 hintergreift.

Der Behälter 6 besteht zumindest auf seiner Außenseite aus HDPE, das beim Anschweißen des Stutzens mit dem thermoplastischen Kunststoff des zweiten Teils 2 eine Schmelzverbindung eingeht.

Zwischen dem Fortsatz 7 und dem zweiten Teil 2 ist eine Ringnut 10 freigelassen, in die beim Anschweißen des Stutzens am Behälter 6 geschmolzenes Material des zweiten Teils 2 ausweichen kann.

## Patentansprüche

1. Rohrartiger Stutzen, der thermoplastischen Kunststoff aufweist, zum Anschließen einer Fluidleitung an einem Behälter (6), der thermoplastischen Kunststoff aufweist, wobei der Stutzen einen ersten Teil (1) und einen zweiten Teil (2) aufweist, die im Zweikomponenten-Spritzgießverfahren verbunden sind und von denen der erste Teil (1) eine geringere Kriechneigung unter Druckbelastung und eine geringere Quellfähigkeit gegenüber kohlenwasserstoffhaltigen Fluiden als der zweite Teil (2) hat und der zweite Teil (2) eine Schmelzverbindung mit dem Behälter (6) eingeht, **dadurch gekennzeichnet, daß** der zweite Teil (2) einen Verstärkungsfüllstoff enthält, dessen Menge und Art so gewählt sind, daß die Kriechneigung und Quellfähigkeit des zweiten Teils (2) annähernd gleich der des ersten Teils (1) sind, zwischen dem zweiten Teil (2) und dem Behälter (6) eine mindestens ebenso hohe Festigkeit der Verbindung wie zwischen den beiden Teilen (1, 2) erreichbar ist und die Wärmeformbeständigkeit des zweiten Teils (2) wenigstens gleich der des Behälters (6) und höchstens nahezu gleich der des ersten Teils (1) ist.

2. Stutzen nach Anspruch 1, **dadurch gekennzeichnet, daß** der Verstärkungsfüllstoff aus der Gruppe der Kunststoffasern, Polyamide (PA), Polyethylenterephthalate (PET), Polybutylenterephthalate (PBT), Polyethylennahphthalate (PEN), Polybutylennaphthalate (PBN), Polyphenylensulfide (PPS), Aramide, Flüssigkristallpolymeren (LCP), Glasfasern, Glaskugeln, Mineralien, pflanzlichen Fasern und Nanoteilchen, wie Nanoton und Nanoröhrchen, z.B. Graphit-Nanoröhrchen, ausgewählt ist.

3. Stutzen nach Anspruch 2, **dadurch gekennzeichnet, daß** die Schmelztemperatur der Kunststoffasern um wenigstens 20°C höher als die des Kunststoffs des zweiten Teils (2) ist.

4. Stutzen nach Anspruch 2 oder 3, **dadurch gekennzeichnet, daß** die Diffusionssperrfähigkeit der Kunststoffasern größer als die des Kunststoffs des zweiten Teils ist.

5. Stutzen nach einem der Ansprüche 1 bis 4, **dadurch gekennzeichnet, daß** das thermoplastische Material des ersten Teils (1) aus der Gruppe der Polyamide, Polyester, Polyolefine, Polyphenylensulfide (PPS), Fluorthermoplaste und Polyacetale ausgewählt ist.

6. Stutzen nach einem der Ansprüche 1 bis 5, **dadurch gekennzeichnet, daß** der zweite Teil (2) und/oder der erste Teil (1) zusätzlich eine Diffusionssperrschicht (3) aufweist.

7. Stutzen nach Anspruch 8, **dadurch gekennzeichnet, daß** die beiden Teile (1, 2) und die Sperrschicht (3) im Mehrkomponenten-Spritzgießverfahren ausgebildet sind.

8. Stutzen nach einem der Ansprüche 1 bis 7, **dadurch gekennzeichnet, daß** der thermoplastische Kunststoff des zweiten Teils (2) ein funktionalisierter Kunststoff ist.

9. Stutzen nach Anspruch 8, **dadurch gekennzeichnet, daß** der funktionalisierte Kunststoff des zweiten Teils (2) ein mit Maleinsäureanhydrid gepfropftes Polyolefin ist.
